Europäisches Patentamt

(19) European Patent Office (11) Numéro de publication: **0 149 387**

Office européen des brevets **B1**

# (12) FASCICULE DE BREVET EUROPÉEN

(45) Date de publication du fascicule du brevet: 12.08.87

(21) Numéro de dépôt: **84402582.5**

(22) Date de dépôt: **13.12.84**

(51) Int. Cl.⁴: **B 66 B 15/06,** B 66 B 19/00

---

(54) **Procédé et dispositif pour modifier les positions en hauteur relatives des cages de machines d'extraction de mines.**

---

(30) Priorité: **05.01.84 FR 8400100**

(43) Date de publication de la demande: **24.07.85 Bulletin 85/30**

(45) Mention de la délivrance du brevet: **12.08.87 Bulletin 87/33**

(84) Etats contractants désignés: **DE GB SE**

(56) Documents cité:
**DE-A-2 943 639**
**FR-A-2 528 816**

(73) Titulaire: **FIVES- CAIL BABCOCK, Société anonyme, 7 rue Montalivet, F-75383 Paris Cédex 08 (FR)**

(72) Inventeur: **Lacoste, Bernard, 34, rue Jacques Perdrix, F-59300 Valenciennes (FR)**

(74) Mandataire: **Fontanié, Etienne, FIVES- CAIL BABCOCK 7, rue Montalivet, F-75383 Paris Cedex 08 (FR)**

EP 0 149 387 B1

## Description

La présente invention concerne les machines d'extraction de mines comportant un premier tambour solidaire d'un arbre moteur, un second tambour monté fou sur cet arbre et un embrayage comprenant un premier organe solidaire en rotation de l'un des tambours et monté de façon à pouvoir être déplacé axialement par rapport aux dits tambours et un second organe solidaire de l'autre tambour, ces deux organes étant munis de dents qui peuvent être amenées en prise avec un jeu angulaire par déplacement axial du premier organe pour rendre le second tambour solidaire en rotation du premier tambour. Sur chaque tambour s'enroule un câble qui supporte une cage, les sens d'enroulement des câbles sur les tambours étant inverses de sorte que lorsqu'une cage monte l'autre descend et lorsqu'une cage est au jour l'autre est au fond.

Lorsqu'on désire modifier les positions en hauteur relatives des deux cages, par exemple pour atteindre une plus grande profondeur, on dégage les dents du premier organe des dents du second organe pour désaccoupler les deux tambours, le second tambour étant bloqué, on fait tourner le premier tambour pour amener la cage à la hauteur voulue, on fait tourner l'un ou l'autre des tambours pour amener les dents de l'un desdits organes exactement en face des intervalles entre les dents de l'autre organe et on commande le déplacement axial du premier organe de l'embrayage pour accoupler les deux tambours.

Dans toutes les machines de ce type actuellement en service, cette série d'opérations est commandée manuellement par un opérateur placé près du treuil.

Dans le document FR-A- 2.528.816 on a proposé un dispositif permettant de commander ces opérations à distance et muni de moyens pour amener automatiquement les organes de l'embrayage, liés respectivement à l'arbre moteur et au tambour fou, dans des positions relatives telles que leur accouplement soit possible. Ces moyens comprennent plusieurs doigts disposés radialement sur un support solidaire de l'arbre ou du tambour fou et aptes à coopérer avec une couronne crantée solidaire du tambour fou ou de l'arbre, respectivement. Ce mécanisme est relativement compliqué et, par conséquent, coûteux et sa fiabilité peut être mise en cause par le matage des doigts et/ou des crans.

On a également proposé (DE-A- 2.943.639) d'utiliser un capteur détectant le passage devant lui d'un élément solidaire en rotation de l'un des tambours pour signaler à un opérateur la position correcte, permettant l'accouplement, des dents des deux organes de l'embrayage. L'intérêt d'un tel dispositif est faible car l'arrêt du tambour ne peut pas être immédiat compte tenu de son inertie et de celle de son mécanisme d'entrainement, et, même en supposant que la réaction de l'opérateur au signal délivré par le capteur soit instantanée, les organes de l'embrayage ne se trouveront plus en position correcte lorsque le tambour s'arrêtera. L'opérateur devra donc rechercher une nouvelle position d'accouplement par une série de démarrages et d'arrêts, la seule différence notable par rapport à la façon de procéder actuelle étant que l'opérateur n'est pas obligé de se trouver près du treuil. Le dispositif décrit dans ce document ne permet donc pas l'automatisation de ces opérations.

Le but de la présente invention est d'apporter au problème posé par le réglage des positions relatives des cages des machines d'extraction de mines une solution originale permettant la commande à distance des opérations nécessaires et leur automatisation complète et faisant appel à du matériel plus simple et moins coûteux que les systèmes mécaniques connus et qui reste fiable dans le temps.

La présente invention a pour objet un procédé de réglage en hauteur des cages d'une machine d'extraction de mines telle que décrite ci-dessus, caractérisé en ce qu'on fait tourner le premier tambour pour amener la cage au niveau choisi, on compte le nombre d'impulsions émises pendant la rotation du premier tambour par un codeur accouplé à celui-ci et émettant M x N impulsions par tour de tambour, M étant tel que $M \varepsilon > \frac{2}{N}$, N étant le nombre de dents des organes de l'embrayage et $\varepsilon$ le jeu angulaire entre les dents lorsque les deux organes sont en prise, on calcule le nombre M' < M d'impulsions correspondant au décalage angulaire des dents des deux organes de l'embrayage en fin de rotation du premier tambour, on fait tourner le second tambour dans le même sens que le premier, qui est alors bloqué, en comptant le nombre d'impulsions émises pendant cette rotation par un second codeur accouplé au second tambour et émettant M x N impulsions par tour du tambour, on arrête la rotation du second tambour lorsque le nombre d'impulsions émises par le second codeur est égal au nombre d'impulsions calculé M', et on commande l'accouplement des deux tambours.

L'invention a également pour objet un dispositif pour modifier le réglage en hauteur des cages d'une machine d'extraction de mines telle que décrite ci-dessus caractérisé en ce qu'il comporte un premier codeur rotatif accouplé à l'arbre moteur, un organe d'entrainement pouvant être accouplé au second tambour, des moyens pour commander le déplacement dudit organe suivant un arc de cercle, un arbre lié cinématiquement audit organe et un second codeur rotatif accouplé à cet arbre. Cet organe d'entrainement peut être constitué par un chariot déplaçable sur un chemin en arc de cercle concentrique au second tambour et muni de pinces de serrage par l'intermédiaire desquelles il peut être rendu solidaire dudit tambour. Ce chariot pourra être déplacé, par exemple, au moyen d'un vérin. L'arbre auquel est accouplé le second codeur pourra être entrainé en rotation au moyen d'une chaine dont une extrémité sera liée au chariot, qui passera sur un pignon solidaire de l'arbre et sera tendue par un ressort ou un contrepoids accroché à son autre extrémité.

La description qui suit se réfère aux dessins qui l'accompagnent et montrent, à titre d'exemple non-limitatif, un mode de réalisation de l'invention. Sur ces dessins:

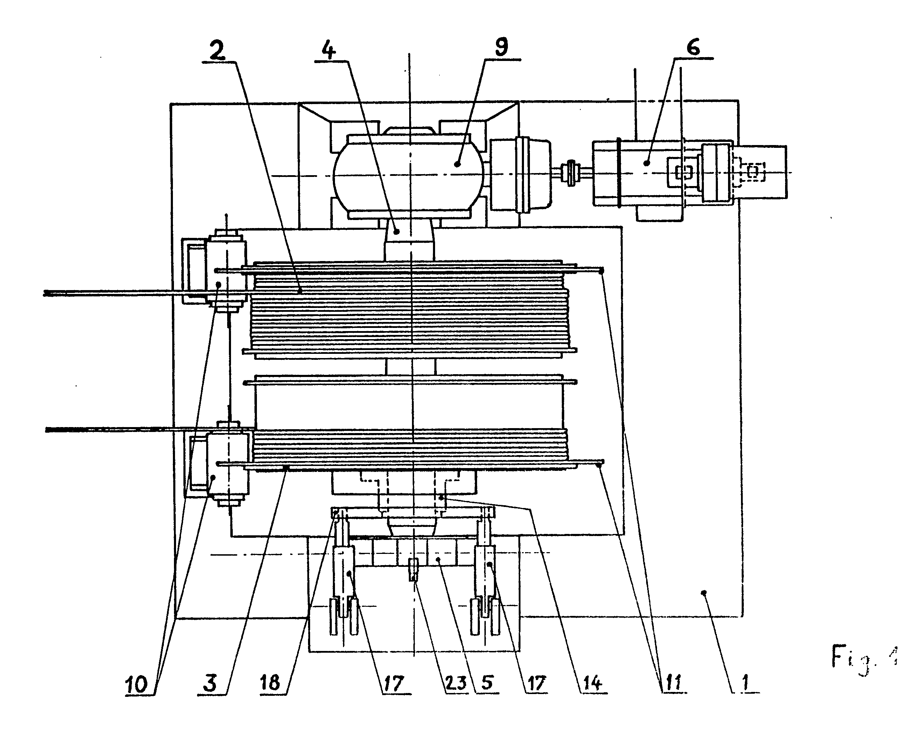

La figure 1 est une vue de dessus d'un treuil de machine d'extraction de mine équipé du dispositif selon l'invention;

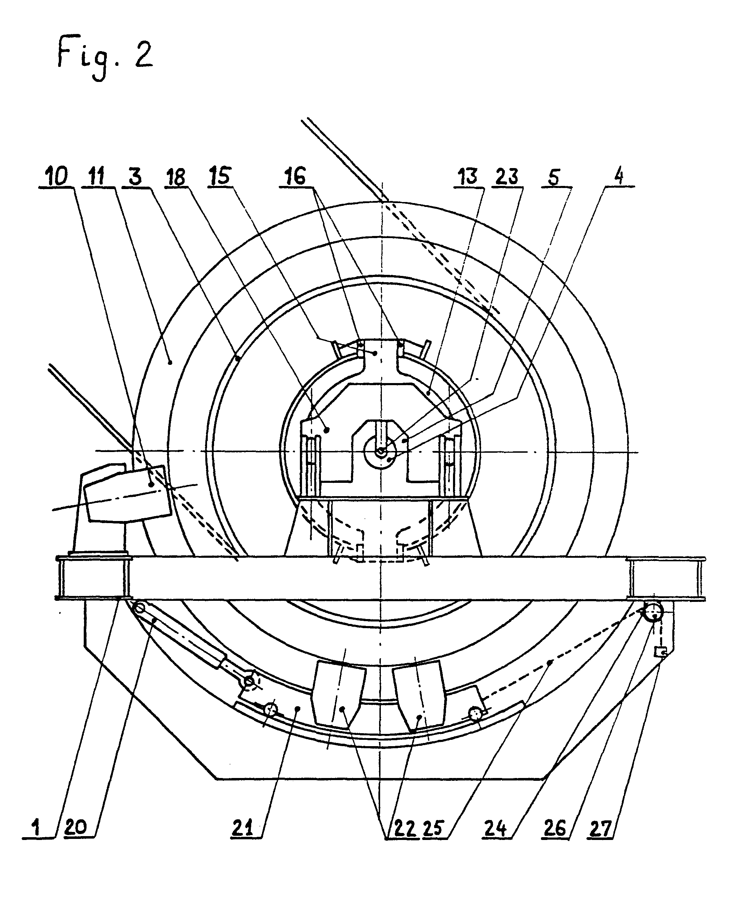

La figure 2 est une vue en élévation du treuil; et

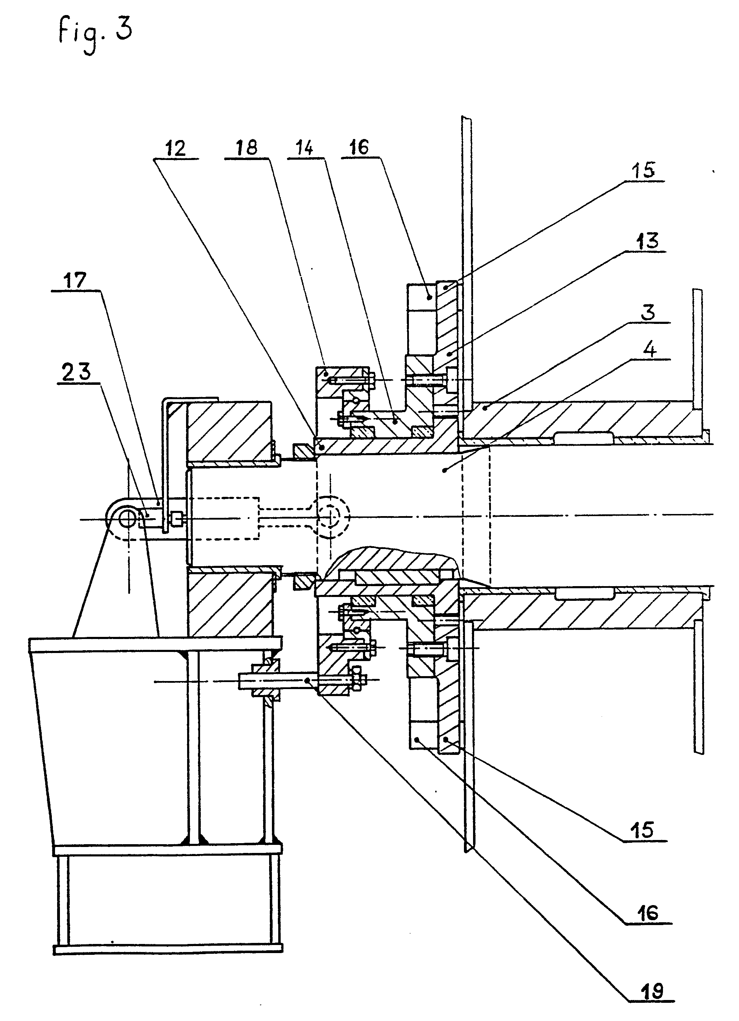

La figure 3 est une coupe montrant les détails de l'embrayage du treuil.

Sur les figures le repère 1 désigne le chassis d'un treuil qui comprend un tambour 2 solidaire d'un arbre horizontal 4 et un tambour 3 monté fou sur cet arbre. L'arbre 4 est supporté à une de ses extrémités par un palier 5 et à son autre extrémité par des paliers incorporés à un réducteur 9 à roue et vis tangente dont l'arbre d'entrée est accouplé à un moteur 6; la roue du réducteur est solidaire de l'arbre 4.

A chaque tambour est associé un système de freinage 10 constitué par des patins disposés de part et d'autre d'un anneau plat 11 solidaire du tambour et montés sur un support fixé au chassis 1, et un dispositif hydraulique permettant d'appliquer les patins sur les faces apposées de l'anneau avec une force suffisante pour empêcher le tambour de tourner.

Le tambour fou 3 peut être rendu solidaire de l'arbre 4 au moyen d'un embrayage constitué par un manchon 12 claveté sur l'arbre et muni à son extrémité adjacente au tambour 3 de dents régulièrement réparties sur sa périphérie et par un anneau 13 solidaire en rotation du tambour et muni d'une denture intérieure en prise avec les dents du manchon 12. L'anneau 13 est fixé sur un second manchon 14 pouvant coulisser axialement sur le manchon 12 et est muni d'oreilles 15 maintenues entre des butées 16 formant glissières fixées sur le tambour, ce qui permet de le déplacer entre une première position où ses dents sont en prise avec celles du manchon 12, le tambour fou étant alors solidaire en rotation de l'arbre 4, et une seconde position où ses dents sont dégagées de celles du manchon 12, le tambour fou étant désolidarisé de l'arbre. Pour commander l'embrayage on utilise deux vérins 17 accrochés au chassis et à un plateau 18 monté, par l'intermédiaire d'un roulement à billes sur le manchon 14. Un goujon 19 solidaire du plateau 18 et coulissant dans une bague fixée sur le chassis interdit la rotation du plateau.

Pour modifier les positions en hauteur relatives des cages accrochées aux câbles enroulés sur les tambours, on fait tourner le tambour 2 au moyen du moteur 6, après avoir bloqué le tambour 3, au moyen du système de freinage 10 qui lui est associé, et désaccouplé les deux tambours en dégageant les dents de l'anneau 13 de celles du manchon 12.

Après réglage, il faut accoupler à nouveau les tambours 2 et 3, au moyen de l'embrayage, mais pour cela il est nécessaire que les dents de l'anneau 13 se trouvent exactement en face des intervalles entre les dents du manchon 12. Cela n'est généralement pas le cas et il faut faire tourner le tambour fou pour réaliser cette coïncidence. La rotation du tambour fou en vue en vue du positionnement correct des dents de l'anneau 13 par rapport à celle du manchon 12 est commandée par un vérin 20 déplaçant un chariot 21 roulant sur un chemin en arc de cercle concentrique au tambour 3 et portant un système de freinage 22 analogue au système 10; lorsque les patins du système de freinage 22 sont serrés sur l'anneau 11, le déplacement du chariot provoque la rotation du tambour.

Conformément à l'invention, le tambour fou est amené automatiquement dans la position permettant l'accouplement du manchon 12 et de l'anneau 13. Les moyens utilisés à cette fin comportent essentiellement deux codeurs rotatifs émettant des impulsions dont les nombres sont proportionnels aux angles de rotation des tambours 2 et 3, respectivement, deux compteurs dénombrant les impulsions émises par les codeurs respectifs et un dispositif comparant les indications de deux compteurs.

L'un des codeurs 23 est accouplé directement à l'arbre 4. Il émet à chaque tour un nombre d'impulsions égal à M x N, N étant le nombre de dents du manchon 12 et de l'anneau 13 de l'embrayage et M étant un entier dont la valeur dépend de la précision requise pour le positionnement des organes de l'embrayage et, par conséquent, du jeu $\varepsilon$ existant entre les dents de ces organes quand ils sont accouplés; il doit être tel que $M \varepsilon > \frac{2\pi}{N}$. A chaque tour, le codeur emet un signal qui permet la remise à zéro du compteur qui lui est associé.

Le second codeur 24 est accouplé au chariot 21 par une chaine 25 dont une extrémité est liée à ce dernier, qui passe sur un pignon 26 monté sur l'arbre du codeur et qui est tendue par un contrepoids 27 accroché à son autre extrémité. Le diamètre du pignon est tel qu'il effectue un tour complet lorsque le tambour fou, entrainé par le chariot 21, tourne d'un angle égal à $\frac{2\pi}{N}$. A chaque tour le codeur 24 émet M impulsions.

Les codeurs 23 et 24 peuvent être, par exemple, des codeurs optiques.

Avant chaque réglage de la position des cages, les compteurs associés aux codeurs 23 et 24 sont mis à zéro. Pendant la rotation du tambour 2, le compteur associé au codeur 23 est remis à zéro à chaque tour, de sorte qu'en fin de rotation, il indique un nombre X correspondant à la fraction de tour effectué par le tambour après le dernier tour complet. Ce nombre est traité par un calculateur qui détermine le nombre M' tel que:

$$X = MN' + M'$$, N' étant un entier et M' < M.

Si M' = 0 les organes de l'embrayage sont en position d'accouplement et celui-ci est commandé, soit manuellement, soit automatiquement si les impulsions des codeurs sont traitées dans un microprocesseur, et réalisé au moyen des vérins 17.

Si M′ est différent de zéro on commande les freins 22 et le vérin 20 pour faire tourner le tambour fou 3 dans le même sens que le tambour 2, jusqu'à ce que le nombre Y indiqué par le compteur associé au codeur 24 soit égal à M′. Les organes de l'embrayage sont alors en position d'accouplement et les vérins 17 sont commandés pour accoupler le tambour fou à l'arbre 4.

Le comptage des impulsions, le calcul de M′, la comparaison des indications des compteurs et la commande de l'embrayage peuvent être effectuées par un microprocesseur qui peut d'ailleurs commander toutes les opérations suivant un programme préétabli avec les sécurités nécessaires.

## Revendications

1. Procédé pour modifier le réglage en hauteur des cages d'une machine d'extraction de mines comportant un premier tambour (2) solidaire d'un arbre moteur (4), un second tambour (3), monté fou sur cet arbre et un embrayage comprenant un premier organe (13) solidaire en rotation de l'un des tambours et monté de façon à pouvoir être déplacé axialement par rapport aux dits tambours et un second organe (12) solidaire de l'autre tambour, ces deux organes étant munis de N dents qui peuvent être amenées en prise avec un jeu angulaire $\varepsilon$ par déplacement axial du premier organe pour rendre le second tambour solidaire en rotation du premier tambour, consistant à dégager les dents du premier organe des dents du second organe pour désaccoupler les deux tambours, le second tambour étant bloqué, à faire tourner au moins l'un des tambours pour amener les dents de l'un desdits organes exactement en face des intervalles entre les dents de l'autre organe et à commander le déplacement axial du premier organe de l'embrayage pour accoupler les deux tambours, caractérisé en ce qu'on fait tourner le premier tambour pour amener la cage au niveau choisi, on compte le nombre d'impulsions émises pendant la rotation du premier tambour par un codeur (23) accouplé à celui-ci et émettant M x N impulsions par tour du tambour, M étant tel que $M\varepsilon > \frac{2\pi}{N}$, on calcule le nombre ($M′ < M$) d'impulsions, correspondant au décalage angulaire des dents des deux organes de l'embrayage en fin de rotation du premier tambour, on fait tourner le second tambour dans le même sens que le premier, qui est alors bloqué, en comptant le nombre d'impulsions émises pendant cette rotation par un second codeur (24) accouplé au second tambour et émettant M x N impulsions par tour de tambour, on arrête la rotation du second tambour lorsque le nombre d'impulsions émises par le second codeur est égal au nombre d'impulsions calculé M′, et on commande l'accouplement des deux tambours.

2. Dispositif pour modifier le réglage en hauteur des cages d'une machine d'extraction de mines comportant un premier tambour (2) solidaire d'un arbre moteur (4), un second tambour (3) monté fou sur cet arbre et un embrayage comprenant un premier organe (13) solidaire en rotation de l'un des tambours et monté de façon à pouvoir être déplacé axialement par rapport aux tambours et un second organe (12) solidaire de l'autre tambour, ces deux organes étant munis de dents qui peuvent être amenées en prise par déplacement axial du premier organe pour rendre le second tambour solidaire en rotation du premier tambour, caractérisé en ce qu'il comporte en outre un premier codeur rotatif (23) accouplé à l'arbre moteur (4), un organe d'entrainement (21) pouvant être accouplé au second tambour (3), des moyens (20) pour commander le déplacement dudit organe suivant un arc de cercle, un arbre lié cinématiquement audit organe et un second codeur rotatif (24) accouplé à cet arbre.

3. Dispositif selon le revendication 2, caractérisé en ce que ledit organe d'entrainement (21) est constitué par un chariot déplaçable sur un chemin en arc de cercle concentrique au second tambour (3) et muni de pinces de serrage (22) par l'intermédiaire desquelles il peut être rendu solidaire dudit tambour.

4. Dispositif selon la revendication 3, caractérisé en ce que les moyens pour déplacer ledit chariot sont constitués par un vérin (20).

5. Dispositif selon le revendication 3 ou 4, caractérisé en ce que l'arbre auquel est accouplé le second codeur (24) est entrainé en rotation au moyen d'une chaine (25) dont une extrémité est liée au chariot (21), qui passe sur un pignon (26) solidaire de l'arbre et qui est tendue par un ressort ou un contrepoids (27) accroché à son autre extrémité.

## Patentansprüche

1. Verfahren zur Höhenverstellung der Körbe einer Bergbaufördermaschine, bestehend aus einer ersten, mit einer Antriebswelle (4) kraftschlüssig verbundenen Trommel (2), einer zweiten, auf dieser Antriebswelle lose montierten Trommel (3) und einer Kluppung, die ein erstes, mit einer der Trommeln drehverbundenes und so montiertes Organ (13), dass es sich axial zu den Trommeln bewegen kann, und ein zweites, mit der anderen Trommel kraftschlüssig verbundenes Organ (12) aufweist, wobei diese beiden Organe mit N Zähnen versehen sind, die durch Axialbewegung des ersten Organs mit einem Winkelspiel $\varepsilon$ miteinander in Eingriff gebracht werden können, damit die zweite Trommel mit der ersten Trommel drehverbunden wird, bestehend darin, die Zähne des ersten Organs von den Zähnen des zweiten Organs zu lösen, um die beiden Trommeln loszukuppeln, wobei die zweite Trommel blockiert ist, mindestens eine der Trommeln drehen zu lassen, um die Zähne eines der obengenannten Organe genau gegenüber den Lückenweiten zwischen den Zähnen des anderen Organs zu bringen, und die Axialbewegung des ersten Kupplungsorgans zu steuern, um die beiden Trommel zu kuppeln, dadurch gekennzeichnet, dass man die erste Trommel drehen lässt, um den Korb auf die gewählte Höhe zu bringen, man die Anzahl der während der Drehung der ersten Trommel durch einen mit dieser Trommel gekuppelten und M x N Impulse je Trommeldrehung emittierenden Kodierer (23) emittierten Impulse zählt, wobei M so ist, dass $M > \frac{2\pi}{N}$, man die der Winkelverschiebung der Zähne der beiden Kupplungsorgane am Ende der Drehung der ersten Trommel entsprechende Impulsanzahl (M' < M) berechnet, man die zweite Trommel in der gleichen Richtung drehen lässt, wie die erste Trommel, die dann blockiert ist, wobei man die Anzahl der während dieser Drehung durch einen zweiten, mit der zweiten Trommel gekuppelten und M x N Impulse je Trommeldrehung emittierenden Kodierer (24) emittierten Impulse zählt, man die Drehung der zweiten Trommel unterbricht, wenn die Anzahl der durch den zweiten Kodierer emittierten Impulse gleich der berechneten Impulsanzahl M' ist, und man die Kupplung der beiden Trommel steuert.

2. Einrichtung zur Höhenverstellung der Körbe einer Bergbaufördermaschine, bestehend aus einer ersten, mit einer Antriebswelle (4) kraftschlüssig verbundenen Trommel (2), einer zweiten, auf dieser Antriebswelle lose montierten Trommel (3) und einer Kupplung, die ein erstes, mit einer der Trommeln drehverbundenes und so montiertes Organ (13), dass es sich axial zu den Trommeln bewegen kann, und ein zweites, mit der anderen Trommel kraftschlüssig verbundenes Organ (12) aufweist, wobei diese beiden Organe mit Zähnen versehen sind, die durch Axialbewegung des ersten Organs in Eingriff miteinander gebracht werden können, damit die zweite Trommel mit der ersten Trommel drehverbunden wird, dadurch gekennzeichnet, dass sie ferner einen ersten, mit der Antriebswelle (4) gekuppelten drehenden Kodierer (23), ein mit der zweiten Trommel (3) kuppelbares Antriebsorgan (21), Mittel (20) zur Steuerung der kreisbogenförmigen Bewegung dieses Antriebsorgans, eine mit diesem Antriebsorgan kinematisch verbundene Welle und einen zweiten drehenden, mit dieser Welle gekuppelten Kodierer (24) aufweist.

3. Einrichtung nach Anspruch 2, dadurch gekennzeichnet, dass das obengenannte Antriebsorgan (21) aus einem Wagen besteht, der auf einer zur zweiten Trommel (3) konzentrischen kreisbogenförmigen Bahn beweglich und mit Spannzangen (22) versehen ist, über die er mit der obengenannten Trommel kraftschlüssig verbunden werden kann.

4. Einrichtung nach Anspruch 3, dadurch gekennzeichnet, dass die Bewegungsmittel des Wagens aus einem Zylinder (20) bestehen.

5. Einrichtung nach Anspruch 3 oder 4, dadurch gekennzeichnet, dass die Welle, mit der der zweite Kodierer (24) gekuppelt ist, mittels einer Kette (25) drehangetrieben ist, die an einem Ende mit dem Wagen (21) verbunden ist, über ein mit der Welle kraftschlüssig verbundenes Ritzel (26) läuft und durch eine Feder oder ein an ihrem anderen Ende aufgehängtes Gegengewicht (27) gespannt ist.

**Claims**

1. Method to alter the relative level of the cages of a mining hoist winding machine comprising a first drum (2) integral with a drive shaft (4), a second drum (3) idle-mounted on this shaft and a clutch which includes a first component (13) integral in rotation with one of the drums and mounted in such a way that it can be moved axially with respect to the said drums, and a second component (12) integral with the other drum, these two components being fitted with N teeth which can mesh with an angular clearance $\varepsilon$ by axial displacement of the first component to make the second drum integral in rotation with the first drum, method consisting in freeing the teeth of the first component from those of the second component to uncouple the two drums, the second drum being locked, in rotating at least one of the drums to bring the teeth of one of the said components exactly opposite the spacings between the teeth of the other component and in controlling the axial displacement of the first clutch component to couple the two drums, characterized by the fact that the first drum is made to rotate to bring the cage to the level selected, that the number of pulses generated during the rotation of the first drum by an encoder (23) which is coupled to the latter and generates M x N pulses per drum revolution is counted, M being such as $M \varepsilon > \frac{2\pi}{N}$, the number (M' < M) of pulses which corresponds to the angular shift of the teeth of the two clutch components at the end of the first drum rotation is calculated, that the second drum is rotated in the same direction as the first, which is then locked, while counting the number of pulses generated during this rotation by a second encoder (24) coupled to the second drum and generating M x N pulses per drum revolution, that the rotation of the second drum is stopped when the number of pulses generated by the second encoder is equal to the number of pulses calculated (M') and that the coupling of both drums is controlled.

2. Apparatus to alter the relative level of the cages of a mining hoist winding machine comprising a first drum (2) integral with a drive shaft (4), a second drum (3) idle-mounted on this shaft and a clutch which includes a first component (13) integral in rotation with one of the drums and mounted in such a way that it can be moved axially with respect to the drums, and a second component (12) integral with the other drum, these two components being fitted with teeth which can mesh by axial displacement of the first component to make the second drum integral in rotation with the first drum, characterized by the fact that it also includes a first rotary encoder (23) coupled to the drive shaft (4), a drive component (21) which can be coupled to the second drum (3), means (20) to control the displacement of the said component along a circular arc, a shaft kinematically linked to the said component and a second rotary encoder (24) coupled to this shaft.

3. Apparatus according to claim 2, characterized by the fact that the said drive component (21) consists of a carriage which is movable along a path forming a circular arc concentric with the second drum (3) and provided with clamps (22) through which it can be made integral with the said drum.

4. Apparatus according to claim 3, characterized by the fact that the means to move the said carriage consists of a cylinder jack (20).

5. Apparatus according to claim 3 or 4, characterized by the fact that the shaft to which the second encoder (24) is coupled is rotated by a chain (25), the end of which is linked to the carriage (21), which goes on a pinion (26) integral with the shaft and which is stretched by a spring or a counterweight (27) hanging from its other end.

Fig. 1

Fig. 2

Fig. 3

5